# EUROPEAN PATENT SPECIFICATION

(11) **EP 3 762 571 B1**
(45) Date of publication and mention of the grant of the patent: **23.08.2023**
(21) Application number: 19716476.7
(22) Date of filing: 06.03.2019
(51) Int. Cl.: E05D 1/06, E05D 7/00, E05D 7/10

(54) **RELEASABLE CONNECTION MEANS**
LÖSBARE VERBINDUNGSMITTEL
MOYEN DE LIAISON LIBÉRABLE

(30) Priority: 09.03.2018 GB 201803822
(43) Date of publication of application: 13.01.2021
(73) Proprietor: Connectum Patents & Brands BV, 2990 Wuustwezel (BE)
(72) Inventor: TATUM, Carl, Berwick Upon Tweed, Northumberland TD15 1JF (GB)
(74) Representative: Sandersons
(86) International application number: PCT/GB2019/050627
(87) International publication number: WO 2019/171056

(56) References cited:
- DE-A1- 2 748 185
- US-A- 2 618 809
- US-B1- 8 584 319

## Description

This invention relates to a support structure comprising a plurality of like releasable connection means.

There are many forms of hinge-type connector configured to fasten things together. Generally, such connectors are permanent in nature, i.e. the parts forming the connector are assembled together during manufacture and are designed not to disengage. Even when not a permanent configuration, existing connectors are either difficult to disengage, typically requiring tools or disengage too easily when not desired. Conventionally, hinge-type connectors are formed from two parts, rotatably engaged together. The two parts typically either include "male" connections provided on one part arranged to cooperate with complementary "female" connections provided on the other part or include two identical parts connected together with a pin. As well as being complex in nature, the assembly and manufacture of such connectors is time consuming and thus expensive, requiring multiple parts and complex tooling. Moreover, such connectors are limited in use and are applicable only where a hinged link is required and cannot be used to provide a generally linear linkage of parts, for example for linking tiles. Furthermore, these types of connector are difficult to replace or repair. US 8 584 319 B1, DE 27 48 185 A1 and US 2 618 809 each describe releasable connection means.

It is a principle aim of the present invention to provide connection means which address at least some of the above-mentioned problems associated with conventional connectors and which are quick and simple to assemble and disassemble when required.

According to the present invention, there is provided a support structure as claimed in claim 1.

The configuration requires the parts that are to be connected merely to have identical connecting pairs in order to facilitate engagement; in other words, there is no need for the parts to have different connections. The channel of the hook element is configured to receive the bar of another connecting means and when received a rotatable hinge connection is formed. The bar may be any shape which facilitates rotation thereof within the channel of a hook element. The bar may be generally circular or oval in cross section or may have an angular or irregular outer profile.

Preferably, to facilitate engagement of the connection means with like connection means, the connection means of the respective parts to be connected are positioned so as to be inversely orientated relative to each other. In practice such an orientation requires the hook element of each connecting pair to be positioned directly opposite the bar of the other connecting pair.

To avoid unintentional disengagement, the connecting means on the part to be connected is configured only to engage and disengage the connecting means of the another part to be connected at a specific rotational position of the parts relative to each other. In this way, once the parts are rotated away from the specific position, i.e. to an operational position, disengagement is prevented. Thus, the engagement and disengagement at a specific rotational position enables identical connecting pairs on distinct connection means to be connected together mechanically without the need for tools or fasteners, such as pins.

The term "hook" in relation to the "hook element" shall be interpreted to mean a feature which can locate at least partly around the bar. The hook element may be configured to define generally a major arc profile (i.e. a circumference greater than 180 degrees) around a connected bar. Alternatively, the hook element may be configured to define generally a minor arc (i.e. a circumference of 180 degrees or less) around a connected bar.

The opening of the hook element defines the specific position for engagement and disengagement of the parts to be connected. In order to vary the maximum operational range of rotation, the opening in the hook to the channel may be provided at any position on the hook. In one arrangement, the opening may be provided at or adjacent the edge of the part to be connected.

It may be desirable to limit the extent of relative rotation of the parts to be connected and/or to prevent unintentional disconnection of the parts. Such an arrangement may be beneficial to create a semi-permanent connection or where the connecting means are utilised to connect together parts which are not intended to move once installed, such as tiles. In this way, the relative rotation of the parts to be connected may serve the purpose of merely facilitating connection of the parts and thereafter, once rotated to an operational position, it may be desirable to prevent or resist unintentional movement back to a disengaging position. To achieve this the connection means may further comprise a lock element arranged to retain the connecting means in an engaged position. In a simplistic form the lock element may comprise an abutment.

Preferably, the lock element comprises a ledge adjacent the channel of a connecting pair configured such that a rotational force applied to the connection means when engaged with the like connection means moves the parts to be connected from an unlocked engaged position to a locked operational position. In this arrangement, the ledge may include an abutment surface and a sliding surface arranged so that rotation of the parts to be connected from an unlocked engaged position towards a locked operational position will cause the sliding surfaces of the respective ledges of engaged connecting pairs to pass over each other. The ledge is preferably tapered or ramped relative to the connecting means to define the sliding surface with the abutment surface being defined adjacent the sliding surface at the ledges greatest point. The passing of the respective sliding surfaces may cause some resilient displacement or deformation of the ledges. The ledge may be configured such that rotation of the parts to be connected from a locked operational position towards an unlocked engaged position will cause the abutment surfaces of the respective ledges of engaged connecting pairs to abut thereby to block movement of the parts to be connected to an unlocked engaged position. The ledge of the connecting pair may be configured so that movement of the parts to be connected back to an unlocked engaged position may be achieved upon a rotational force being applied to the parts which exceeds a particular threshold in order to allow the sliding surfaces to engage. This arrangement serves to avoid accidental movement to the unlocked position. The transition between the abutment surface and the sliding surface may be curved or otherwise shaped to facilitate rotation from the locked operational position back to the unlocked engaged position when desired.

The bar is preferably spaced from the edge so as to define a region therearound about which the hook may rotate. Such an arrangement may serve to maximise the operational range of rotation of the bar within the channel. To achieve the desired spacing, the connecting pair may include two arms projecting from the edge with the bar extending between and carried by the two arms. The bar may be formed from one or more parts arranged to enable engagement fully or in part within the channel of a hook element. For structural integrity and for enhanced security it is preferable that the bar extends in an uninterrupted continuous form from one arm to the other. The bar may be integrally formed with the arms or may be secured thereto during manufacture. Where the connecting means includes a lock element, it may be provided on one of the arms of a connecting pair.

Variations in the location of the hook element relative to the bar are feasible, provided inter-engagement of the connecting pair with an identical connecting pair is still permitted. Preferably, the hook element and bar of the connecting pair are spaced apart and lying generally perpendicular to each other along the edge. The spacing between the hook element and the bar preferably corresponds to the width of one of the arms of a connecting pair to permit engagement of the connecting pair with an identical connecting pair. Such an arrangement may assist with the interconnection of different parts in a range of configurations.

To provide an enhanced connection the edge may define two identical connecting pairs provided in a lengthwise spaced disposition along the edge. More than two identical connecting pairs may be provided along the edge. Where more than one connecting pair is provided, the hook elements and bars are preferably spaced equidistantly along said edge. This will produce a repeating sequence of hook elements and bars and provides greater flexibility as it may allow a range of different types of connection and may enable the connection together or more than two connection means - for example this arrangement would facilitate a piano "bridging" type connection between two adjacent but potentially staggered parts. Where more than two connecting pairs are provided, immediately adjacent hook elements of adjacent connecting pairs may be inversely orientated in relation to each other so as to be diametrically opposed with respect to the rotational axis. In such a configuration the hook elements may be configured to define generally a minor arc with a relatively large opening. In this arrangement, the opening of the hooks is preferable configured such that a force must be applied to engage and disengage the connection means at a specific rotational position of the parts relative to each other. In this arrangement, adjacent hook elements of adjacent connecting pairs act together to maintain engagement of the parts. Once engaged, the connection means will not disengage until the respective connection means are at the specific rotational position and sufficient force is applied to pull the parts apart.

To facilitate engagement between connection means and like connection means, at least one connection pair of each must be identical. In some cases, the entire connection means and the entire like connection means may be identical. This configuration significantly reduces manufacturing complexity time and expense as one only type of connector is required to form an engagement rather than having to form separate types of connections.

The pin-less releasable hinge assembly is preferably not limited only to two like connection means and may include a plurality of like or mating connection means arranged to engage together when the respective connecting pairs are brought into registration. More than two connecting means may be connected together in a hinge type formation, such as a "piano style" connection whereby one connection means effectively engages two further connection means in a bridge formation so that the connecting pairs of the one connection means engage with identical connecting pairs of each of the two further connection means. In this arrangement a range of configuration are possible.

The edge is provided on a support structure being an item to be interconnected. The support structure may be a generally planar board or plate, such as a tile or a hinge plate or a toy road piece, for example. Such a board or plate can take a variety of shapes depending on the desired application. The support structure comprises a plurality of edges, with each edge having connection means as hereinbefore defined. In this way the releasable connection means and the pin-less releasable hinge assembly may be used to provide a system of links which could be used in a variety of different ways as circumstances require.

Though in preferred embodiments the connection means is moulded integrally with the support structure which carries the connection means, it would be possible to manufacture the connection means as a separate component which is then attached or otherwise associated with the support structure. This allows for different materials to be used for the connection means and the support structure. The support structure may include other features depending on the desired application, for example the support structure may include one or more retaining member for guiding one or more cable or other assembly to be held.

The support structure may include fastening means to secure the hinge to a surface. The fastening means may be an opening defined in the support structure configured to receive a screw fixing.

The configuration of the releasable connection means of the present invention facilitates mechanical engagement and disengagement of identical connecting pairs when the associated connecting means are rotated to a position outside of their operating range. The arrangement of hook elements and bars serve to maintain the mechanical engagement within the operating range without requiring pins or other fasteners. No specific tooling movements or "tool sliders" are required during manufacture of the connecting means as the parts thereof are essentially identical. The connecting pairs of the present invention may be configured entirely with symmetrically alternate 'hooks' and 'bars' so that an interfacing boundary edge could adjoin to another identical interface boundary edge directly thus creating a versatile linkage mechanism.

A further advantage of the present invention relates to manufacturing simplicity. The configuration of the connection means, as described herein, means that it may be moulded or die-cast within a single line of draw (the direction in which the two custom injection mould halves will separate from the moulded part allowing it to be ejected without any obstructions creating undercuts) and this ensures that the manufacturing process is straight forward and also means that very cheap moulding or die-casting tools can be utilised. In effect the connection means of the present invention is formed with the opening and channel in the hook element being "cored out" from one half of the mould cavity, without being undercut and with the bar moulded by two halves in such a position that it will engage with the cored out hooks when aligned to an identical connecting pair. The connection means and/or support structure may be formed from any suitable material. Preferably the material is suitable for processing by injection moulding or other shaping techniques. The material may be resiliently flexible to assist with the assembly, disassembly and possible movement during use. The material may be a thermoplastic, such as polypropylene, nylon or ABS (Acrylonitrile butadiene styrene), for example.

By way of example only, an embodiment of this invention will now be described in detail, reference being made to the accompanying drawings in which:-
**Figure 1** is perspective front view of connection means according to the present invention;
**Figure 2** is perspective rear view of connection means according to the present invention;
**Figure 3** is a perspective view of a pin-less releasable hinge assembly according to the present invention in a non-engaged configuration;
**Figure 4** is a perspective view of the pin-less releasable hinge assembly of Figure 3 engaged in a releasable position;
**Figure 4a** is a cross-sectional cut-out view of the connection means of the releasable hinge assembly of Figure 4 showing the relative positions of the hook element openings;
**Figure 5** is a perspective view of the pin-less releasable hinge assembly of Figure 3 engaged in an operative position;
**Figure 6** is a perspective view of an alternative pin-less releasable hinge assembly, which is not part of the invention, including three connection means provided on separate support structures and engaged together in an operative position;
**Figure 7** is a perspective view of a support structure according to the present invention providing connection means along three separate edges;
**Figure 8** is a perspective view of an alternative support structure according to the present invention providing two connection means along two opposite edges and defining a cable guide;
**Figure 9a** is a perspective view of one form of connecting means which is not part of the invention;
**Figure 9b** shows cross sectional views through sections A-A and B-B of Figure 9a;
**Figure 10a** is a perspective view of another form of connecting means which is not part of the invention; and
**Figure 10b** shows cross sectional views through sections A-A and B-B of Figure 10a.

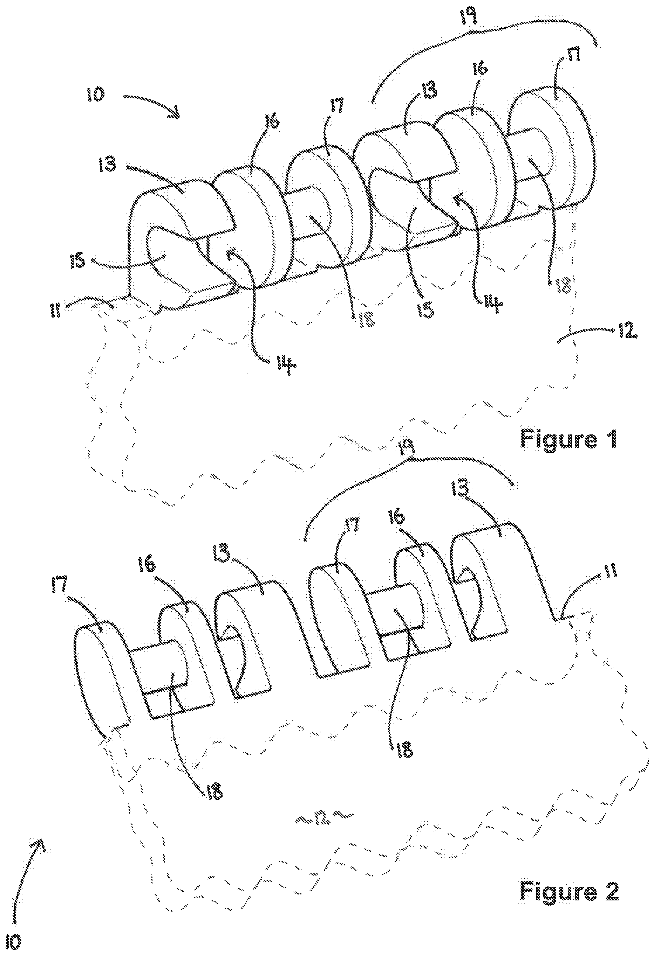

Referring initially to Figures 1 and 2, there is shown releasable connection means 10 provided along an edge 11 of a support structure 12. A hook element 13, generally C-shaped in cross-section, extends from the edge 11. The shape of the hook element 13 defines an opening 14 to a substantially cylindrical channel 15 with the plane of the opening 14 being located generally at right angles with respect to the plane of the edge 11 of the support structure 12. Adjacent the hook element 13, a set of two generally cylindrical arms 16, 17 project from the edge 11 of the support structure 12 and a cylindrical bar 18 is secured to and extends completely between these two arms 16, 17. The size and shape of the channel 15 of the hook element 13 is complementary to that of the bar 18 such that a bar 18 on another connection means may locate within the channel 15 (as described in more detail below) and the opening 14 to the channel 15 is appropriately sized to facilitate such an arrangement.

The hook element 13 along with the arms 16, 17 and extending bar 18 together define a connecting pair 19. In the connection means 10 illustrated in all of the Figures, two identical connecting pairs 19 are provided along an edge 11 of the connection means 10, those connecting pairs 19 being equidistantly spaced along the support structure edge 11. Although only two connecting pairs 19 are shown, the invention is not restricted to such a configuration.

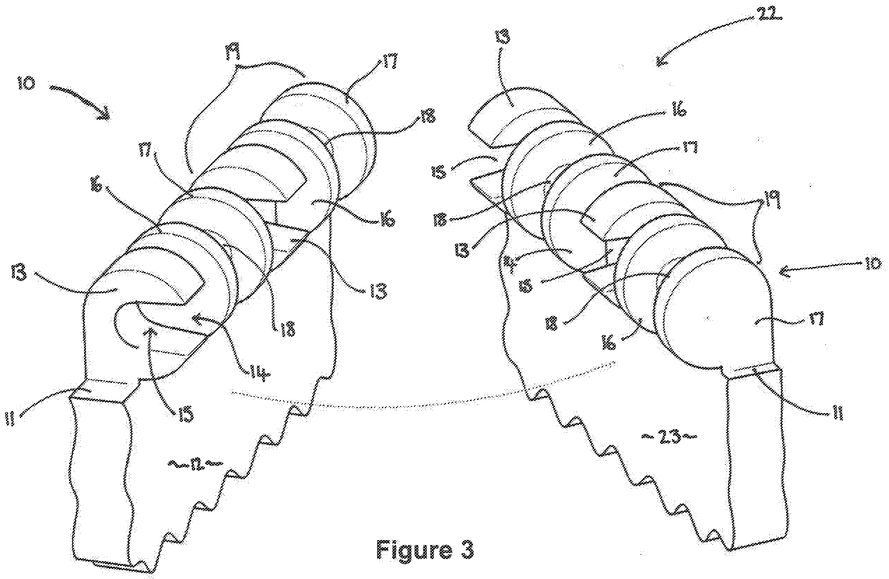

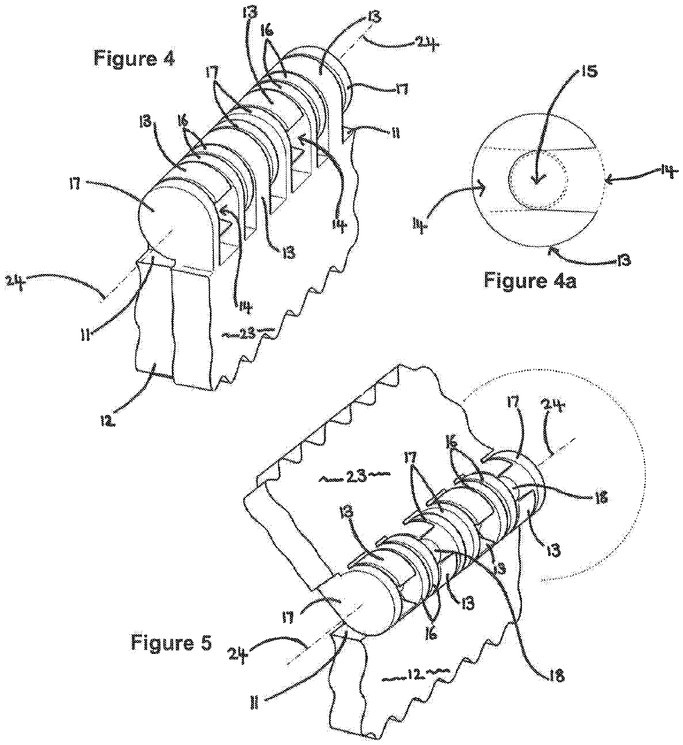

Referring now to Figures 3 to 5, there is shown a pin-less releasable hinge assembly 22 comprising two identical releasable connection means 10 for securing two support structures 12, 23 together. In this arrangement, the support structures 12, 23 are shown as two generally planar boards, but other types of formation are equally envisaged, as will be described in more detail below. The hook elements 13 of each of the connection means 10 are configured to engage the bars 18 of the other of the connection means 10, as best seen in Figures 4 and 5, in a relatively rotatable configuration to form a hinge joint about a common axis 24 coincident with the bars 18.

As best seen in Figure 3, the two releasable connection means 10 must be inversely orientated relative to each other to facilitate engagement of the complementary engaging pairs 19. As well as ensuring correct orientation of the connection means 10, engagement and disengagement of the respective connection means 10 is possible only at a specific rotational position of the connection means 10, and thus the support structures 12, 23, relative to each other. The relative specific rotational position of the connection means 10 requires the openings 14 to the channels 15 of one of connection means 10 to be axially opposite to the openings 14 to the channels 15 of the other connection means 10, as shown in Figures 4 and 4a. In this arrangement the connection means 10 of the respective support structures 12, 23 are inversely orientated, diametrically, relative to each other in a 180° orientation.

As seen in Figure 5, rotation of the support structures 12, 23 relative to each other causes the relative angular positions of the connection means 10 to change such that the openings 14 of the channels 15 of one of the connection means 10 are no longer axially opposite to the openings 14 to the channels 15 of the other connections means 10. In this orientation disengagement of the engaged connection means 10 is not possible.

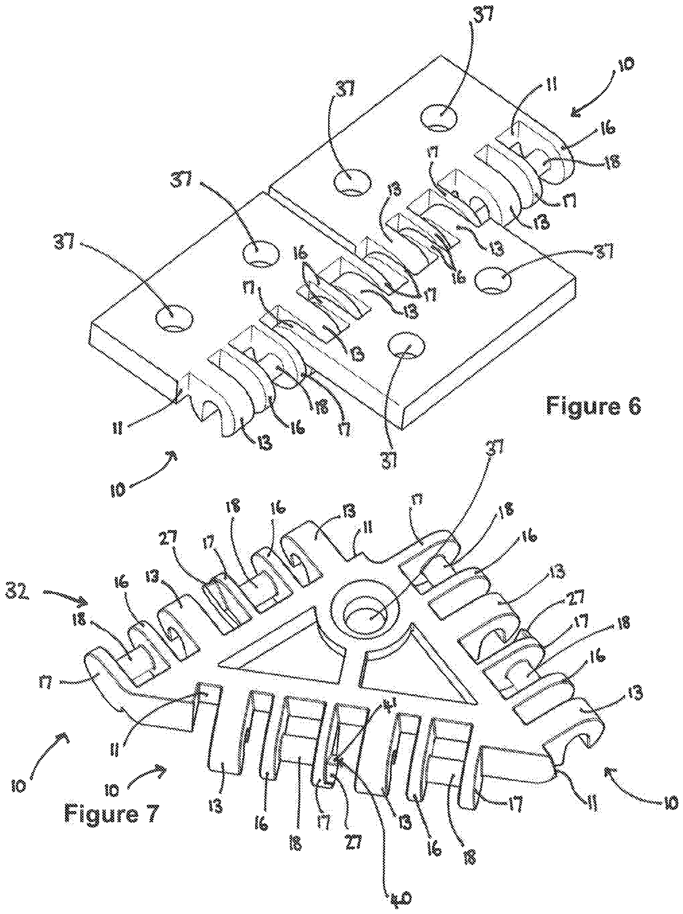

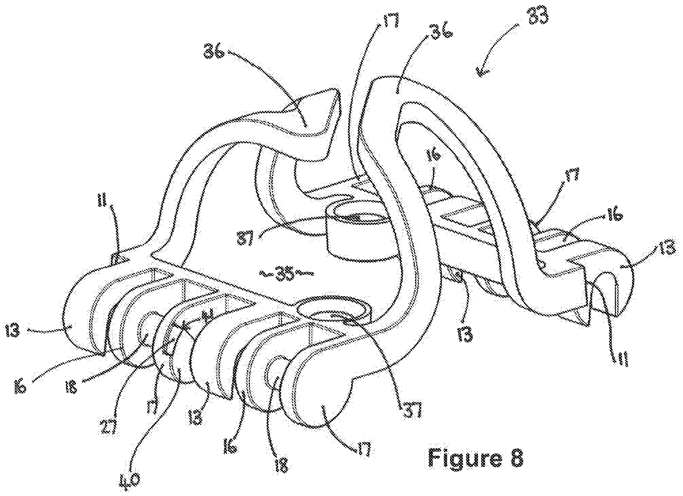

In all configurations a locking element may be provided, although for simplicity it is illustrated only in Figures 7 and 8, in the form of a ledge 27 provided on one of the arms 17 of a connecting pair 19. The ledge 27 extends from a side of the arm 17, remote from the bar connecting side and this defines a sliding surface 40 and an abutment surface 41 arranged so that rotation of the parts to be connected from an unlocked engaged position towards a locked operational position will cause the sliding surfaces 40 of the respective ledges 27 of engaged connecting pairs to pass over each other. The ledge 27 is tapered relative to the arm 17 to define the sliding surface 40 and the abutment surface 41. The transition between the abutment surface 41 and the sliding surface 40 may be curved or otherwise shaped to facilitate rotation from the locked operational position back to the unlocked engaged position when desired. This arrangement serves further to prevent unintentional disengagement of the connection means 10. The ledge 27 may also serve to restrict relative rotation of the connection means 10.

A further advantage of the present invention is that the configuration of the connection means 10 enables more than two support structures to be connected together in a hinge type formation. Figure 6 shows an example which is not part of the invention and which illustrates a "piano style" connection. In this arrangement, three identical support structures 28, 29, 30 are provided, each comprising a generally planar rectangular board defining an edge 11 along which connection means 10 are provided. The connection means 10 of each includes two sets of connecting pairs 19. The first and second support structures 28, 29 are located adjacent each other so that the connection means 10 are side by side to provide a sequence of four aligned connecting pairs 19. The third support structure 30 is engaged with one connecting pair 19 of each of the first and second support structures 28, 29 in a bridging manner. Of course, more than three support structures can be connected in such a configuration.

Although not illustrated, the edge 11 of a connection means may comprise more than two connecting pairs 19. The hook elements of adjacent connecting pairs may be inversely orientated with respect to each other. Additionally, as shown in Figures 7 and 8, in accordance with the present invention a single support structure 32, 33 will have distinct connection means 10 provided along more than one edge 11. The formation of such a support structure can take many forms but is shown in Figure 7 as a triangular shape having three edges 11, and in Figure 8 as a more complex formation having two defined edges 11, with connection means 10 provided along each edge 11.

The support structure may take many different forms, for example, it may be generally planar, as shown in Figures 3 to 6 or may have one or more openings 34, 35 formed therethrough, as shown in Figures 7 and 8. The formation of the support structure 33 of Figure 8 includes raised retaining members 36 which can serve as a cable guide.

Some of the support structures include one or more substantially circular apertures 37 for receiving a screw fastener (not shown) to enable the support structure to be secured to a surface.

The connection means 10 of this invention may be used in any application where a linkage is required, including but not limited to interlinking tiles, a symmetrical enclosure, play road, cable guides and hinges, floating platoon platforms, flexible body armour, emergency bridges, safety fencing, suspension systems and bunds.

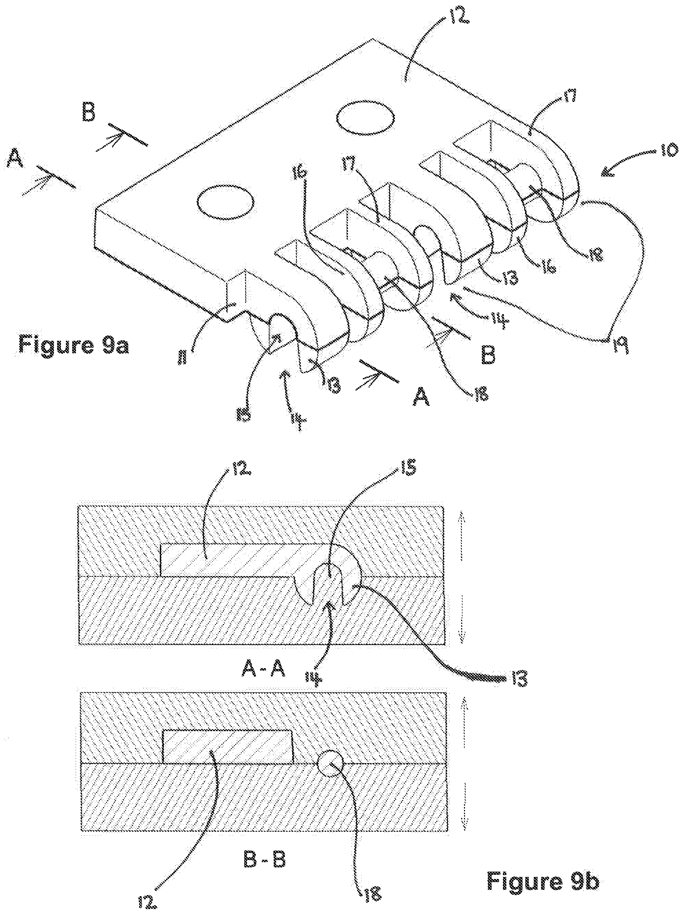

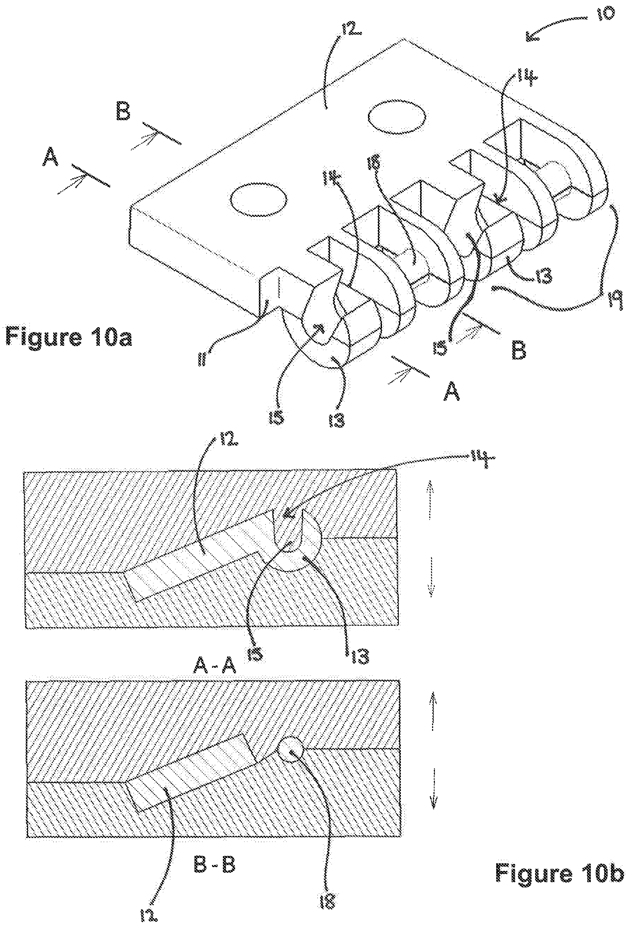

A particularly advantageous benefit of the particular configuration of the connection means of the present invention is that it can be manufactured within a single line of draw. Figures 9a and 10a illustrate two slightly different connection means 10, which are not part of the invention, both having two sets of connecting pairs 19 defined along the edge of a generally planar support structure 12, whereby the only difference relates to the position of the opening 14 to the channels 15 of each of the hooks 13. Figures 9b and 10b illustrate two possible tooling angles by looking at the cross-sectional views through the hook element 13 (A-A) and the bar 18 (B-B) respectively.

In Figure 9a the opening 14 is such that engagement of two connection means 10 is possible when the support structures 12 are diametrically opposed in a face-to-face arrangement. As shown in Figure 9b the tool cavity is open to a single line of draw with the tooling angle being substantially linear. This type of arrangement may be useful for a modular track for example, or a network linkage of connecting means.

The opening 14 in the hook element 13 of Figure 10a is located along the hook 13 somewhat remote from the edge 11 of the connection means 10. In this arrangement engagement of two connection means 10 is possible only when the support structures 12 are angled approximately 280 degrees relative to the face-to face position shown in Figure 9a. Such a configuration is useful for a range of hinge applications, such as for a typical household door hinge, where the specific position of disengagement is outside the operating range once the door has been fixed to the frame. Alternative positions of the opening within the hook to define different engagement angles for the support structures 12 are of course possible.

## Claims

1. A support structure (12;32;33) comprising a plurality of edges (11), each edge (11) defining a pin-less releasable hinge assembly (22) comprising a plurality of like releasable connection means (10), each releasable connection means (10) comprising a hook element (13) and a bar (18) both provided adjacent each other along an edge (11) of the support structure (12;32;33), wherein the hook element (13) defines a channel (15) having a complementary configuration to that of the bar (18), the hook element (13) and the bar (18) together defining a connecting pair (19), wherein the channel (15) of each hook element (13) of a connecting pair (19) of one connection means (10) is configured to accommodate a bar (18) provided on a connecting pair (19) of another connection means (10) when the connecting pairs (19) are brought into registration, wherein the connection means (10) on the support structure (12;32;33) is configured releasably to engage like connection means (10) on another part to be connected, wherein the like connection means (10) comprises an identical connecting pair (19) on an edge (11) of the another part to be connected, the connecting means (10) on the support structure (12;32;33) being configured only to engage and disengage the connecting means (10) of the another part to be connected at a specific rotational position of the support structure (12;32;33) and the another part to be connected relative to each other, wherein the hook element (13) of the connection means (10) includes an opening (14) providing access to the channel (15) and the relative specific rotational position of the support structure (12;32;33) and the another part to be connected requires the opening (14) to the channel (15) of the support structure (12;32;33) to be axially opposite to the opening (14) to the channel (15) of the another part to be connected, said engagement thereby defining a common axis (24) coincident with the bars (18) and about which the support structure (12;32;33) and the another part to be connected are relatively rotatable to form a hinge.

2. A support structure (12;32;33) as claimed in claim 1, wherein the engagement requires the connection means (10) of the support structure (12;32;33) and the another part to be connected to be inversely orientated relative to each other.

3. A support structure (12;32;33) as claimed in any of the preceding claims, further comprising a lock element arranged to retain the connecting means (10) in an engaged position.

4. A support structure (12;32;33) as claimed in claim 3, wherein the lock element comprises a ledge (27), adjacent the channel (15) of a connecting pair (19), configured such that a relative rotational force applied to the connection means (10) and the like connection means (10), when engaged, moves the support structure (12;32;33) and the another part to be connected from an unlocked engaged position to a locked operational position.

5. A support structure (12;32;33) as claimed in claim 4, wherein the ledge (27) comprises an abutment surface (41) and a sliding surface (40) arranged so that rotation of the support structure (12;32;33) and the another part to be connected from an unlocked engaged position towards a locked operational position will cause the sliding surfaces (40) of the respective ledges (27) of engaged connecting pairs (19) to pass over each other.

6. A support structure (12;32;33) as claimed in claim 5, wherein the ledge (27) is configured such that rotation of the support structure (12;32;33) and the another part to be connected from a locked operational position towards an unlocked engaged position will cause the abutment surfaces (41) of the respective ledges (27) of engaged connecting pairs (19) to abut thereby to block movement of the support structure (12;32;33) and the another part to be connected to an unlocked engaged position.

7. A support structure (12;32;33) as claimed in any of the preceding claims, wherein the connecting pair (19) includes two arms (16,17) projecting from the edge (11) and the bar (18) extends between and is carried by the arms (16,17).

8. A support structure (12;32;33) as claimed in any of the preceding claims, wherein the edge (11) defines two connecting pairs (19) provided in a lengthwise spaced disposition along the edge (11).

9. A support structure (12;32;33) as claimed in any of the preceding claims, wherein the like connection means (10) are identical.

10. A support structure (12;32;33) as claimed in any of the preceding claims, wherein the support structure (12;32;33) includes one or more retaining member (36) for guiding one or more cable.

11. A support structure (12;32;33) as claimed in any of the preceding claims, further comprising fastening means (37) to secure the hinge to a surface.

## Patentansprüche

1. Stützstruktur (12;32;33), umfassend eine Vielzahl von Kanten (11), wobei jede Kante (11) eine stiftlose lösbare Scharnieranordnung (22), umfassend eine Vielzahl von gleichen lösbaren Verbindungsmitteln (10), definiert, jedes lösbare Verbindungsmittel (10) umfassend ein Hakenelement (13) und einen Stab (18), die beide entlang einer Kante (11) der Stützstruktur (12;32;33) angrenzend aneinander bereitgestellt werden, wobei das Hakenelement (13) einen Kanal (15), der eine komplementäre Konfiguration zu der des Stabs (18) aufweist, definiert, das Hakenelement (13) und der Stab (18) zusammen ein Verbindungspaar (19) definieren, wobei der Kanal (15) jedes Hakenelements (13) eines Verbindungspaars (19) eines Verbindungsmittels (10) konfiguriert ist, um einen Stab (18) aufzunehmen, der an einem Verbindungspaar (19) eines anderen Verbindungsmittels (10) bereitgestellt ist, wenn die Verbindungspaare (19) in Deckung gebracht werden, wobei das Verbindungsmittel (10) an der Stützstruktur (12;32;33) lösbar konfiguriert ist, um gleiche Verbindungsmittel (10) an einem anderen zu verbindenden Teil in Eingriff zu nehmen, wobei das gleiche Verbindungsmittel (10) ein identisches Verbindungspaar (19) an einer Kante (11) des anderen zu verbindenden Teils umfasst, wobei das Verbindungsmittel (10) an der Stützstruktur (12;32;33) konfiguriert ist, um nur das Verbindungsmittel (10) des anderen an einer spezifischen Drehposition der Stützstruktur (12;32;33) zu verbindenden Teils und des anderen relativ zueinander zu verbindenden Teils in Eingriff und außer Eingriff zu bringen, wobei das Hakenelement (13) des Verbindungsmittels (10) eine Öffnung (14), die einen Zugang zu dem Kanal (15) und der relativen spezifischen Drehposition der Stützstruktur (12;32;33) bereitstellt, einschließt und der andere zu verbindende Teil erfordert, dass die Öffnung (14) zu dem Kanal (15) der Stützstruktur (12;32;33) axial gegenüber der Öffnung (14) zu dem Kanal (15) des anderen zu verbindenden Teils liegt, wobei der Eingriff dadurch eine gemeinsame Achse (24) definiert, die mit den Stäben (18) übereinstimmt und um die die Stützstruktur (12;32;33) und der andere zu verbindende Teil relativ drehbar sind, um ein Scharnier auszubilden.

2. Stützstruktur (12;32;33) nach Anspruch 1, wobei der Eingriff erfordert, dass das Verbindungsmittel (10) der Stützstruktur (12;32;33) und der andere zu verbindende Teil umgekehrt relativ zueinander ausgerichtet sind.

3. Stützstruktur (12;32;33) nach einem der vorstehenden Ansprüche, ferner umfassend ein Verriegelungselement, das angeordnet ist, um das Verbindungsmittel (10) in einer Eingriffsposition zu halten.

4. Stützstruktur (12;32;33) nach Anspruch 3, wobei das Verriegelungselement eine Leiste (27), die an den Kanal (15) eines Verbindungspaars (19) angrenzt, umfasst, die derart konfiguriert ist, dass eine relative Drehkraft, die auf das Verbindungsmittel (10) und das gleiche Verbindungsmittel (10) ausgeübt wird, wenn in Eingriff genommen, die Stützstruktur (12;32;33) und den anderen zu verbindenden Teil von einer entriegelten Eingriffsposition in eine verriegelte Betriebsposition bewegt.

5. Stützstruktur (12;32;33) nach Anspruch 4, wobei die Leiste (27) eine Anlageoberfläche (41) und eine Gleitoberfläche (40) umfasst, die angeordnet sind, sodass die Drehung der Stützstruktur (12;32;33) und des anderen zu verbindenden Teils von einer entriegelten Eingriffsposition in Richtung einer verriegelten Betriebsposition bewirkt, dass die Gleitoberflächen (40) der jeweiligen Leisten (27) von in Eingriff genommenen Verbindungspaaren (19) übereinander gehen.

6. Stützstruktur (12;32;33) nach Anspruch 5, wobei die Leiste (27) derart konfiguriert ist, dass die Drehung der Stützstruktur (12;32;33) und des anderen zu verbindenden Teils aus einer verriegelten Betriebsposition in Richtung einer entriegelten Eingriffsposition bewirkt, dass die Anlageoberflächen (41) der jeweiligen Leisten (27) von in Eingriff genommenen Verbindungspaaren (19) anliegen, um dadurch die Bewegung der Stützstruktur (12;32;33) und des anderen zu verbindenden Teils in eine entriegelte Eingriffsposition zu blockieren.

7. Stützstruktur (12;32;33) nach einem der vorstehenden Ansprüche, wobei das Verbindungspaar (19) zwei Arme (16,17), die von der Kante (11) vorstehen, einschließt und der Stab (18) sich zwischen den Armen (16,17) erstreckt und von diesen getragen wird.

8. Stützstruktur (12;32;33) nach einem der vorstehenden Ansprüche, wobei die Kante (11) zwei Verbindungspaare (19), die in einer längs beabstandeten Anordnung entlang der Kante (11) sind, definiert.

9. Stützstruktur (12;32;33) nach einem der vorstehenden Ansprüche, wobei die gleichen Verbindungsmittel (10) identisch sind.

10. Stützstruktur (12;32;33) nach einem der vorstehenden Ansprüche, wobei die Stützstruktur (12;32;33) ein oder mehrere Halteelemente (36) zum Führen eines oder mehrerer Kabel einschließt.

11. Stützstruktur (12;32;33) nach einem der vorstehenden Ansprüche, ferner umfassend Befestigungsmittel (37), um das Scharnier an einer Oberfläche zu fixieren.

## Revendications

1. Structure de support (12 ;32 ;33) comprenant une pluralité de bords (11), chaque bord (11) définissant un ensemble de charnière amovible sans broche (22) comprenant une pluralité de moyens de liaison amovible (10) similaire, chaque moyen de liaison amovible (10) comprenant un élément de crochet (13) et une barre (18), les deux étant prévus de manière adjacente le long d'un bord (11) de la structure de support (12 ;32 ;33), dans laquelle l'élément de crochet (13) définit un canal (15) ayant une configuration complémentaire à celle de la barre (18), l'élément de crochet (13) et la barre (18) définissant ensemble une paire de liaisons (19), dans laquelle le canal (15) de chaque élément de crochet (13) d'une paire de liaisons (19) d'un des moyens de liaison (10) est conçu pour recevoir une barre (18) prévue sur une paire de liaisons (19) d'un autre moyen de liaison (10), lorsque les paires de liaisons (19) sont mises en correspondance, dans laquelle le moyen de liaison (10) sur la structure de support (12 ;32 ;33) est conçu de manière amovible pour venir en prise avec un moyen de liaison (10) similaire sur une autre partie à relier, dans lequel le moyen de liaison (10) similaire comprend une paire de liaisons identique (19) sur un bord (11) de l'autre pièce à relier, le moyen de liaison (10) sur la structure de support (12 ;32 ;33) étant conçu uniquement pour venir en prise et désolidariser le moyen de liaison (10) de l'autre pièce à relier à une position de rotation spécifique de la structure de support (12 ;32 ;33) et de l'autre partie à relier l'une par rapport à l'autre, dans laquelle l'élément de crochet (13) du moyen de liaison (10) comporte une ouverture (14) fournissant un accès au canal (15) et à la position de rotation spécifique relative de la structure de support (12 ;32 ;33) et l'autre pièce à relier nécessite l'ouverture (14) au canal (15) de la structure de support (12 ;32 ;33) pour être axialement opposée à l'ouverture (14) au canal (15) de l'autre pièce à relier, ladite mise en prise définissant ainsi un axe commun (24) coïncidant avec les barres (18) et autour de laquelle la structure de support (12 ;32 ;33) et l'autre partie à relier sont relativement rotatives pour former une charnière.

2. Structure de support (12 ;32 ;33) selon la revendication 1, dans laquelle la mise en prise nécessite le moyen de liaison (10) de la structure de support (12 ;32 ;33) et de l'autre partie à relier pour être orientée de manière inversée l'une par rapport à l'autre.

3. Structure de support (12 ;32 ;33) selon l'une quelconque des revendications précédentes, comprenant en outre un élément de verrouillage agencé pour retenir le moyen de liaison (10) dans une position en prise.

4. Structure de support (12 ;32 ;33) selon la revendication 3, dans lequel l'élément de verrouillage comprend un rebord (27), adjacent au canal (15) d'une paire de liaisons (19), conçu de telle sorte qu'une force de rotation relative soit appliquée au moyen de liaison (10) et le moyen de liaison (10) similaire, lorsqu'il est en prise, déplace la structure de support (12 ;32 ;33) et l'autre partie à relier à partir d'une position en prise déverrouillée à une position opérationnelle verrouillée.

5. Structure de support (12 ;32 ;33) selon la revendication 4, dans lequel le rebord (27) comprend une surface de butée (41) et une surface de glissement (40) agencées de sorte que la rotation de la structure de support (12 ;32 ;33) et l'autre partie à relier à partir d'une position en prise déverrouillée vers une position opérationnelle verrouillée amènera les surfaces de glissement (40) des rebords respectifs (27) de paires de liaisons en prise (19) à passer l'une sur l'autre.

6. Structure de support (12 ;32 ;33) selon la revendication 5, dans lequel le rebord (27) est conçu de telle sorte que la rotation de la structure de support (12 ;32 ;33) et l'autre partie à relier à partir d'une position opérationnelle verrouillée vers une position en prise déverrouillée amènera les surfaces de butée (41) des rebords respectifs (27) de paires de liaisons en prise (19) à venir en butée de ce fait pour bloquer le déplacement de la structure de support (12 ;32 ;33) et de l'autre partie à relier à une position en prise de déverrouillage.

7. Structure de support (12 ;32 ;33) selon l'une quelconque des revendications précédentes, dans lequel la paire de liaisons (19) comporte deux bras (16, 17) en saillie à partir du bord (11) et la barre (18) s'étend entre et est portée par les bras (16, 17).

8. Structure de support (12 ;32 ;33) selon l'une quelconque des revendications précédentes, dans lequel le bord (11) définit deux paires de liaisons (19) prévues dans une disposition espacée en longueur le long du bord (11).

9. Structure de support (12 ;32 ;33) selon l'une quelconque des revendications précédentes, dans lequel les moyens de liaison (10) similaires sont identiques.

10. Structure de support (12 ;32 ;33) selon l'une quelconque des revendications précédentes, dans lequel la structure de support (12 ;32 ;33) comporte un ou plusieurs éléments de retenue (36) pour guider un ou plusieurs câbles.

11. Structure de support (12 ;32 ;33) selon l'une quelconque des revendications précédentes, comprenant en outre un moyen de fixation (37) pour fixer la charnière à une surface.
